Europäisches Patentamt

European Patent Office

Office européen des brevets

(19)

(11) Veröffentlichungsnummer: **0 048 032**
A2

(12) # EUROPÄISCHE PATENTANMELDUNG

(21) Anmeldenummer: 81107377.4

(22) Anmeldetag: 17.09.81

(51) Int. Cl.³: **B 60 C 27/14**
**B 60 C 27/06**

(30) Priorität: 17.09.80 DE 3035115

(43) Veröffentlichungstag der Anmeldung:
24.03.82 Patentblatt 82/12

(84) Benannte Vertragsstaaten:
AT BE CH IT LI NL SE

(71) Anmelder: Mangold, Anton
Amselstrasse 4
D-8100 Garmisch-Partenkirchen(DE)

(72) Erfinder: Mangold, Anton
Amselstrasse 4
D-8100 Garmisch-Partenkirchen(DE)

(74) Vertreter: Lorenz, Eduard et al,
Widenmayerstrasse 23
D-8000 München 22(DE)

(54) Schneekette.

(57) Eine Schneekette weist eine innere und eine äußere Seitenkette auf, die teilbar ausgebildet sind. Zwischen den Seitenketten ist ein Spurnetz angeordnet. Um die Montage der Schneekette im Stand zu ermöglichen, ist die innere Seitenkette als flexibler Seitenring (1) ausgebildet, von dessen Stoßenden (4, 5) Kettenstränge (6) derart schräg über die Lauffläche zu dem äußeren Seitenring (2) verlaufen und dort an den Enden befestigt sind, daß sie im montierten Zustand der Schneekette ein Dreieck bilden.

EP 0 048 032 A2

Die Erfindung betrifft eine Schneekette mit einer inneren und einer äußeren Schneekette, die teilbar ausgebildet sind und zwischen denen ein Spurnetz angeordnet ist.

Es sind Schneeketten mit einer inneren und einer äußeren Schneekette bekannt, die teilbar oder endlos ausgebildet sind. Zwischen den beiden Seitenketten befindet sich ein Spurnetz, das verschiedene Grundformen aufweist, wobei Leiter-, Kreuz- und Zick-Zack-Spur die geläufigsten sind. Weiterhin sind Spurketten mit inneren und äußeren geteilten Seitenringen bekannt, die gleichfalls mit einem Spurnetz verbunden sind. Die inneren und äußeren Seitenringe sind jeweils mit einer kunststoffummantelten Drahtseele ausgestattet, die eine starre Rundform bilden.

Der Nachteil der bekannten Schneeketten besteht darin, daß sie nicht im Stand montiert werden können. Es ist vielmehr ein Rangieren erforderlich oder es muß auf die ausgelegte Kette aufgefahren werden.

Der Erfindung liegt die Aufgabe zugrunde, eine Schneekette der eingangs genannten Gattung zu schaffen, bei der eine Montage im Stand möglich ist.

Erfindungsgemäß wird diese Aufgabe dadurch gelöst, daß die innere Seitenkette als flexibler Seitenring ausgebildet ist, von dessen Stoßenden Kettenstränge derart schräg über die Lauffläche zu der äußeren Seitenkette verlaufen und an deren Enden befestigt sind, daß sie im montierten Zustand der Schneekette ein Dreieck bilden.

Der mit der Erfindung erzielbare Vorteil besteht darin, daß die Schneekette im Stand montierbar ist.

Die Montage wird erfindungsgemäß weiterhin dadurch erleichtert, daß an den Enden der äußeren Seitenkette Ringe und an einem Ring zusätzlich eine Spannkette angeordnet ist. Eine weitere Ausgestaltung der Erfindung besteht darin, daß an einem Stoßende des inneren Seitenringes ein Haken und an dem anderen Ende ein Kettenstück angeordnet sind.

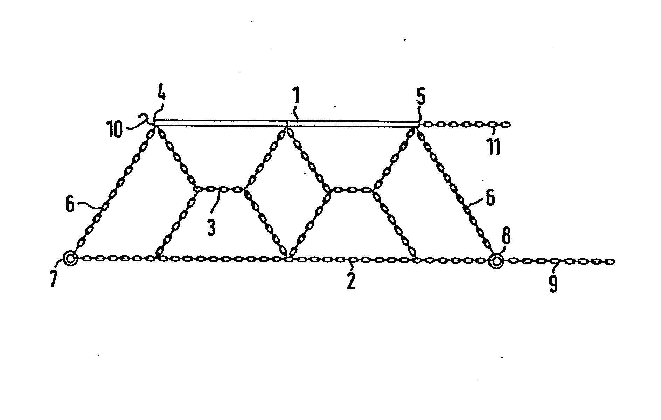

Die Erfindung wird im folgenden anhand des Beispieles der Zeichnung näher erläutert. Die Schneekette weist einen inneren geteilten Seitenring 1 und eine äußere geteilte Seitenkette 2 auf, die mit einem Spurnetz 3 verbunden sind. Dieses Spurnetz ist mit Spurkreuzen versehen. An den beiden Stoßenden 4, 5 des inneren Seitenringes laufen Kettenstränge 6 weg schräg zur äußeren Seitenkette 2, an deren Enden jeweils ein Ring 7 bzw. 8 angeordnet sind, an denen auch die schräg verlaufenden Kettenstränge befestigt sind. Im montierten Zustand bilden beide Kettenstränge ein Dreieck. Die beiden Ringe, 7, 8, werden bei der Montage durch die Spannkette 9 zusammengeführt. Diese Spannkette ist an einem der Ringe befestigt, die im montierten Zustand durch den anderen Ring gezogen, dann wieder zum ersten Ring zurückgeführt und durch diesen gezogen wird. Die Ringe werden so weit wie möglich zusammengezogen und schließen dann die Standfläche des Rades. Die restliche Spannkette wird um die Seitenkette geschlungen. Nach kurzer Fahrt muß nachgespannt werden.

Der innere Seitenring 1 besteht aus einem Drahtseil, das zwischen den Spurkreuzen mit Kunststoffröhrchen überzogen ist. Dies hat den Vorteil, daß der Seitenring bei der Montage flexibler als die bekannten Drahtseitenringe ist und leichter über das Rad gezogen werden kann. Der innere Seitenring 1 und die beiden schrägen Kettenstränge 6 ermöglichen die Montage im Stand.

Der innere Seitenring 1 dient zugleich im offenen Zustand als Montagebügel, dahinter das Rad durchgeschoben und vorne zugehängt wird. Dieser Verschluß wird dann durch eine halbe Drehung hinter das Rad gebracht. Zu diesem Zweck befinden sich an einem Stoßende 4 des inneren Seitenringes 1 ein Haken 10 und am anderen Stoßende 5 ein Stück Kette 11. Dadurch kann die Kette 11 bei der Montage der Größe des entsprechenden Reifens angepaßt werden.

Durch den inneren Seitenring 1 ist das Kettennetz immer in geordnetem Zustand, was die Montage erleichtert.

Die Schneekette kann auch in geschlossenem Zustand montiert werden, d.h., wenn der innere Seitenring als geschlossener Ring ausgebildet ist. Bei dieser Montageart muß man mit dem Rad in den geschlossenen Ring hineinfahren.

P a t e n t a n s p r ü c h e

1. Schneekette mit einer inneren und einer äußeren Seitenkette, die teilbar ausgebildet sind, zwischen denen
ein Spurnetz angeordnet ist, dadurch gekennzeichnet,
daß die innere Seitenkette als flexibler Seitenring (1)
ausgebildet ist, von dessen Stoßenden (4, 5) Kettenstränge (6) derart schräg über die Lauffläche zu dem
äußeren Seitenring (2) verlaufen und dort an den
Enden befestigt sind, daß sie im montierten Zustand
der Schneekette ein Dreieck bilden.

2. Schneekette nach Anspruch 1, dadurch gekennzeichnet,
daß an den Enden der äußeren Seitenkette (2) Ringe
(7,8) und an einem Ring (8) zusätzlich eine Spannkette (9) angeordnet sind.

3. Schneekette nach Anspruch 2 oder 3, dadurch gekennzeichnet, daß an dem Stoßende (4) des inneren Seitenringes (1) ein Haken (10) und an dem anderen Ende (5)
ein Kettenstück (11) angeordnet sind.